# EUROPEAN PATENT APPLICATION

(11) **EP 2 578 913 A1**
(43) Date of publication of application: **10.04.2013**
(21) Application number: 12186780.8
(22) Date of filing: 01.10.2012
(51) Int. Cl.: F16L 1/20, B65H 49/32, H02G 1/10

(54) **Flexible product reel cartridge**

(30) Priority: 07.10.2011 US 201113267941
(71) Applicant: J.Ray McDermott, S.A., Houston, Texas 77079 (US)
(72) Inventor: Screaton, Lee D., Missouri City, TX 77459 (US); Taylor, Leland H., Houston, TX 77094 (US)
(74) Representative: Meldrum, David James

(57) **Abstract**

A reel arrangement on a vessel for storage and laying of flexible product (28) from the vessel offshore. A cartridge, main reel (12) is designed to receive multiple smaller, flexible product standard storage reels (14) in an epicyclic wheel arrangement for storing and laying the flexible product. The cartridge reel is rotated to bring a selected standard product storage reel from a storage position into a laying position where the product may be taken from the product storage reel and laid on the sea floor. A reel drive head (26) is mounted with the product storage reel for laying product and maintaining proper tension on the product during laying operations.

## Description

### Field and Background

The invention is generally related to the storage of flexible product such as flexible pipe and cable and, more particularly but not exclusively, to the use of multiple reels for storage of such flexible product on a vessel and for laying the product on the sea floor.

For the laying of product such as flexible pipe or cable on the sea floor, the product has typically been wound onto a large reel on a vessel. The vessel then sails to the location for laying the product and slowly moves along the intended sea floor path for laying the product as the reel is rotated to release the product. Rotation of the reel requires a drive arrangement capable of handling the weight of the reel and the product and also maintaining a certain minimum amount of tension on the product during laying operations.

In some instances, such as for flexible product of cable or flexible pipe, multiple smaller reels have been loaded with product at the point of manufacture, transported on the smaller reels, and stored on the deck of the vessel.

One disadvantage of using multiple small reels is that they occupy a large amount of deck space on a vessel where efficient use of deck space is important. Another disadvantage is that multiple lifts are required to move the reels onto and off of the vessel as well as to move the reels between the storage positions on deck and the laying position on deck. A disadvantage of using large reels for flexible pipe is that the amount of pipe that can be wound onto the reel may be limited to prevent crushing of the flexible pipe on the reel due to the weight of the flexible pipe wound upon itself. Another problem with large reels is they cannot be easily transported due to the complex logistics of finding equipment capable of lifting larger reels and transporting these reels in the public way.

### Summary

The present approaches have been made in the knowledge of drawbacks and deficiencies in known arrangements.

Particular and preferred aspects and embodiments are set forth in the appended claims.

Viewed from a first aspect, there can be provided an improved arrangement for storing flexible product on vessels before and during laying operations offshore.

Further aspects are directed to a reel arrangement on a vessel for storage and laying of flexible product from the vessel offshore that address one or more drawbacks or deficiencies of the known art. A cartridge reel according to one aspect is designed to receive multiple smaller, flexible product standard storage reels in an epicyclic wheel arrangement for storing and laying the flexible product. The cartridge reel is rotated to bring a selected standard product storage reel from a storage position into a laying position where the product may be taken from the product storage reel and laid on the sea floor. A reel drive head is mounted with the product storage reel for laying product and maintaining proper tension on the product during laying operations.

Various features and combinations thereof provided by the present teachings are pointed out with particularity in the claims annexed to and forming a part of this disclosure. For a better understanding of the teachings, their operating advantages and specific objects attained by their uses, reference is made to the accompanying drawings and descriptive matter in which examples are illustrated.

### Brief Description of the Drawings

In the accompanying drawings, forming a part of this specification, and in which reference numerals shown in the drawings designate like or corresponding parts throughout the same:

FIG. 1 is an elevation view of an example on a vessel.

FIG. 2 is a plan view of an example on a vessel.

FIG. 3 is an enlarged view of item 3 in Fig. 2.

FIG. 4 is a side view of an example without the product storage reels.

FIG. 5 is an end view of an example without the product storage reels.

FIG. 6 is a side view of an example with the product storage reels.

FIG. 7 is an end view of an example with the product storage reels.

FIG. 8 is a side view of an example on a vessel during laying operation with two of the product storage reels emptied.

FIG. 9 is a side view of an example that illustrates rotation of the cartridge reel to place a product storage reel in position for laying product.

While the present teachings are susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the spirit and scope of the present invention as defined by the appended claims.

### Detailed Description

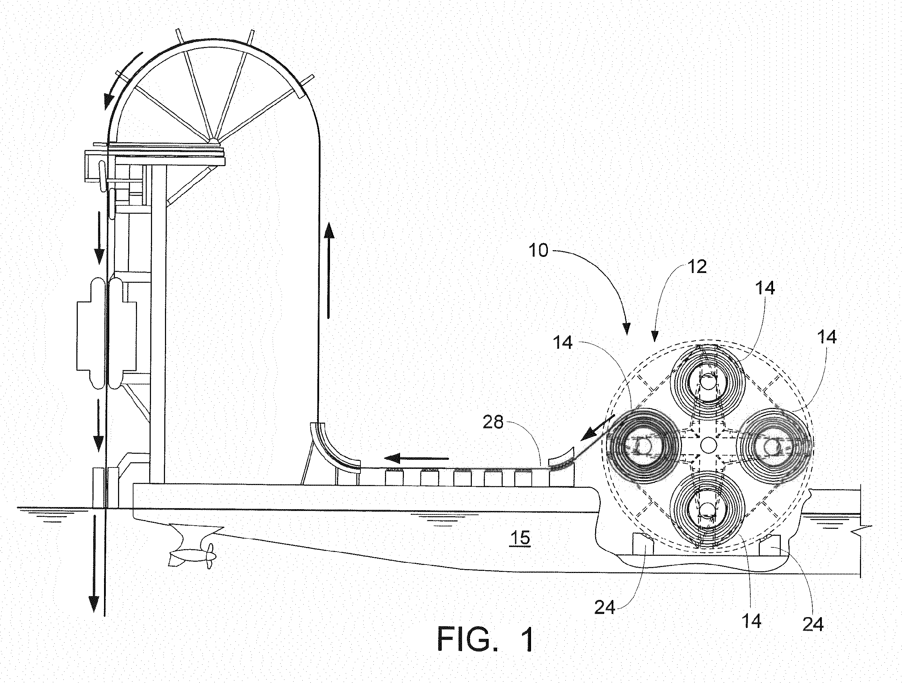

As seen in Fig. 1 and 6 - 8, a carousel product reel according to the present examples is generally indicated by reference numeral 10. Carousel product reel 10 is generally comprised of a cartridge reel 12 and a plurality of product reels 14, means 16 for holding the cartridge reel 12 in a selected position and rotating the cartridge reel 12 into a different position, and means 18 for selective, individual rotation of each of the product reels 14.

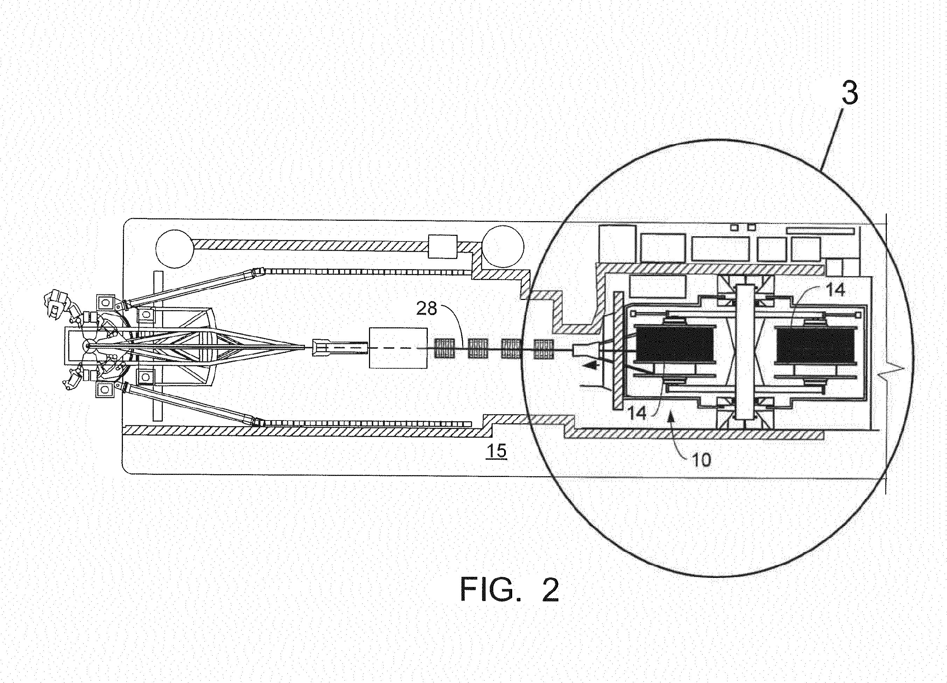

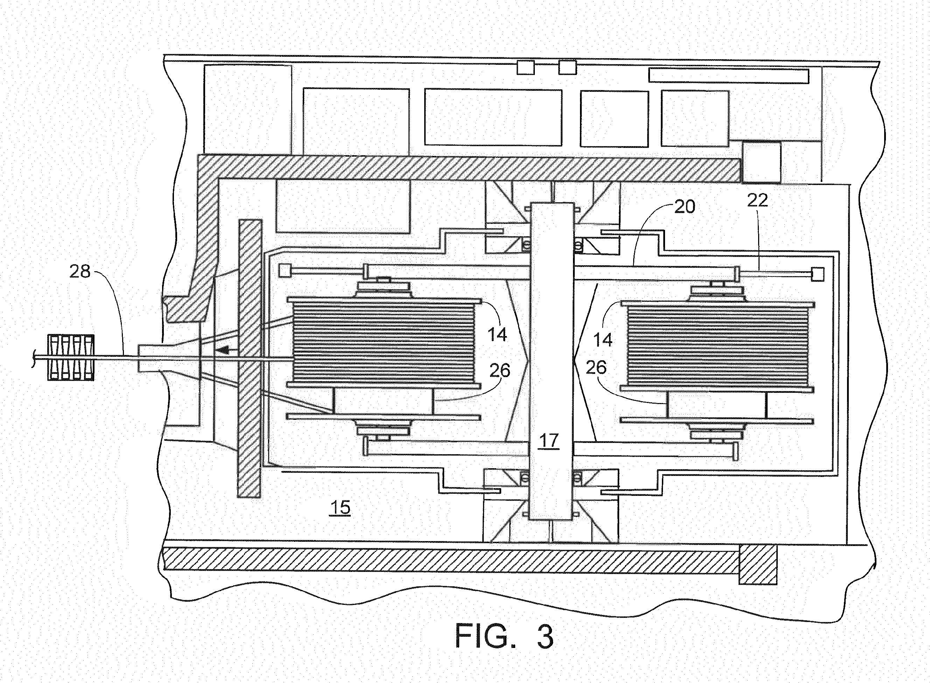

As seen in Fig. 2 - 5, the cartridge reel 12 is a relatively large revolving structure designed to receive multiple smaller standard product storage reels 14 that hold a flexible product such as cable or flexible pipe. The reels used on vessels for storing and laying rigid or flexible product typically can have a diameter as much as 11.4 meters. In the embodiment shown the cartridge reel 12 is positioned vertically on the vessel 15 such that the hub 17 that provides the central axis of rotation of the cartridge reel 12 is in a horizontal plane. However, it should be understood that a horizontal reel arrangement may also be used.

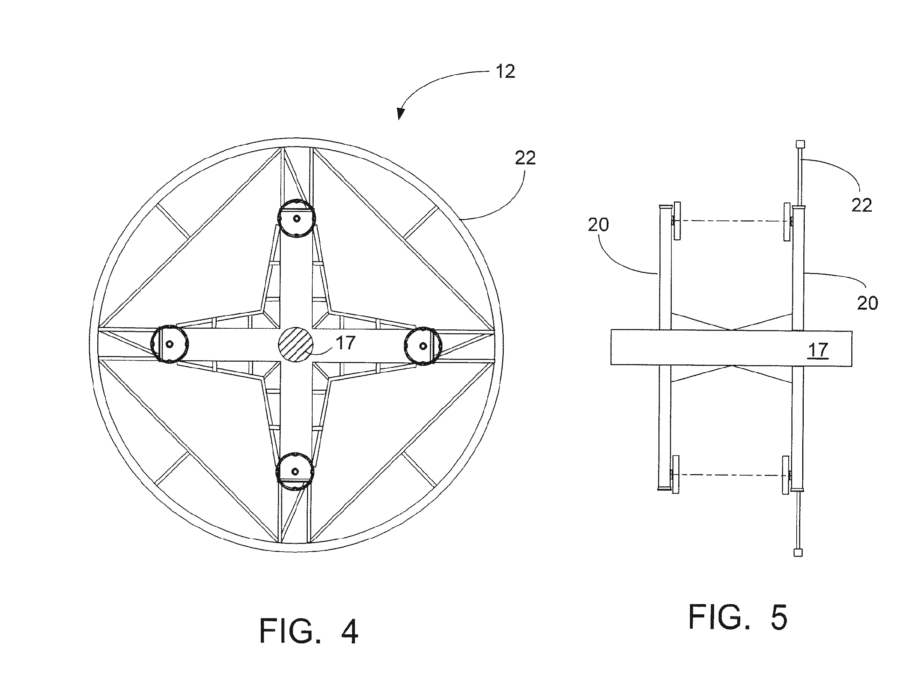

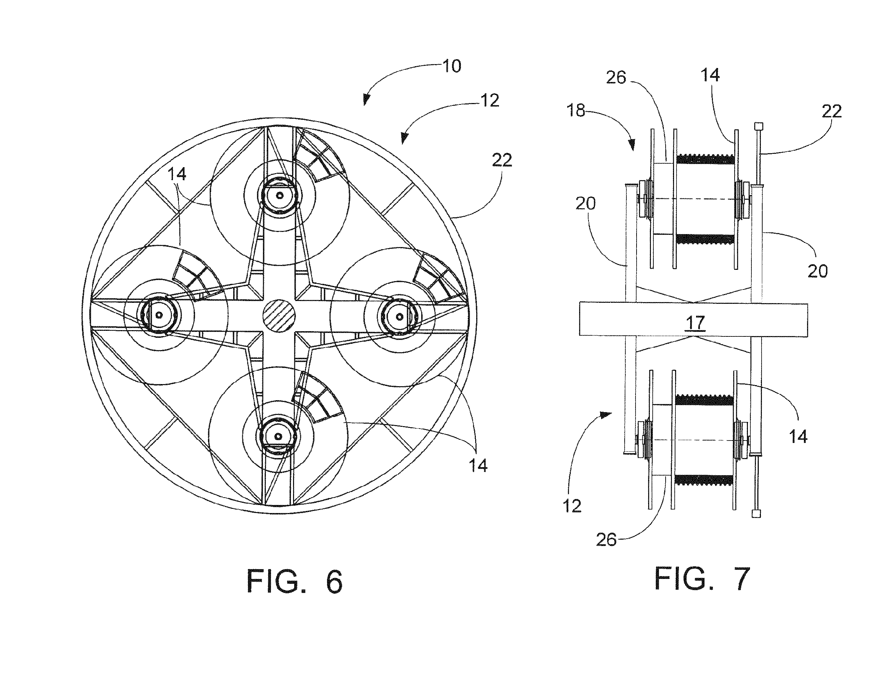

As best seen in Fig. 5 and 7, the cartridge reel 12 is preferably a hub and spoke like structure to reduce weight and cost. A typical pipe or cable reel on a vessel has sides with a large enough diameter on each side of the hub or axle to receive as much product as possible and so that gear cogs on one or both sides will engage with one or more drive motors that are in a fixed position on the vessel.

Because the carousel reel is configured to lay product stored on the smaller product reels 14, the cartridge reel 12 of the present examples may be provided with structural side members 20 of a smaller diameter than those on a typical reel. The cartridge reel 12 is provided with a drive ring 22, best seen in Fig. 4, 5, and 7, that extends circumferentially from the structural side members 20 on one side of the cartridge reel 12 so as to engage with the drive motor 24 on the vessel to rotate and hold the cartridge reel 12 in a selected position. One drive ring 22 should provide sufficient force to rotate the cartridge reel 12 and hold it in position due to the reduced payload on the product reels 14 and the fact that each product reel 14 will have a separate drive mechanism for rotation thereof. The drive ring 22 and drive motor 24 are used in combination as the means 16 for holding the cartridge reel 12 in a selected position and rotating the cartridge reel 12 into a different position. In other examples, a common drive mechanism that is movable to interact with each product reel in turn may be used instead of having a different drive mechanism for each product reel.

The product reels 14 are typical storage reels used for flexible product such as cable or flexible pipe. Each product reel 14 is paired with means 18 for selective rotation and holding the reel 14 in place in the form of a reel drive head 26 that locks into the central core of the product reel 14. For ease of availability and use, the reel drive head 26 is preferably a standard reel drive head as typically used in the offshore industry.

In operation, product reels 14 are loaded at an onshore location with product 28 such as cable or flexible pipe. The product reels 14 may be installed onto a cartridge reel 12 at an onshore location so that the cartridge reel 12, filled with product reels 14 having product, is ready for lifting and installation onto a product laying vessel 15 in a single lift as seen in Fig. 1. The product reels 14 may also be installed one at a time onto a cartridge reel 12 that is already installed on a vessel 15 while the vessel 15 is offshore and for replacement with full reels 14 for potentially continuous laying of product 28 while offshore.

As seen in Fig. 1 - 3, the cartridge reel 12 is moved so as to position a product reel 14 for laying of the product 28. The product reel 14 is rotated by the reel drive head 26 and the product 28 is guided by equipment on the vessel 15 for laying the product 28 on the sea floor. The cartridge reel 12 is held in position by the engagement of the drive ring 22 and the drive motor 24 during the pay out of product 28 from the product reel 14.

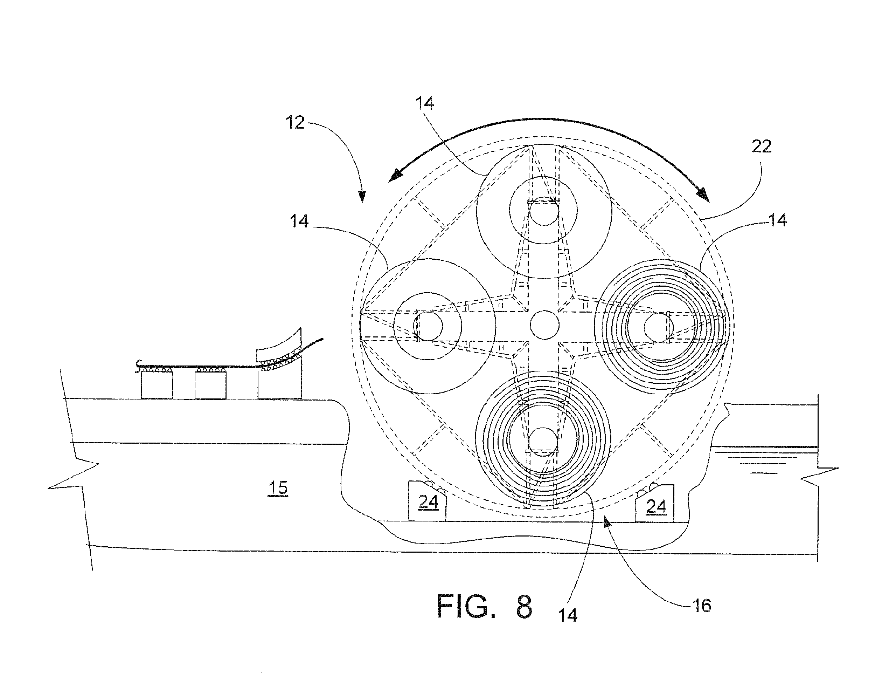

As seen in Fig. 8 the cartridge reel 12 is rotated to move another full product reel 14 into position once the product 28 has been paid out from other product reels 14. The cartridge reel 12 may be rotated in either a clockwise or counterclockwise direction.

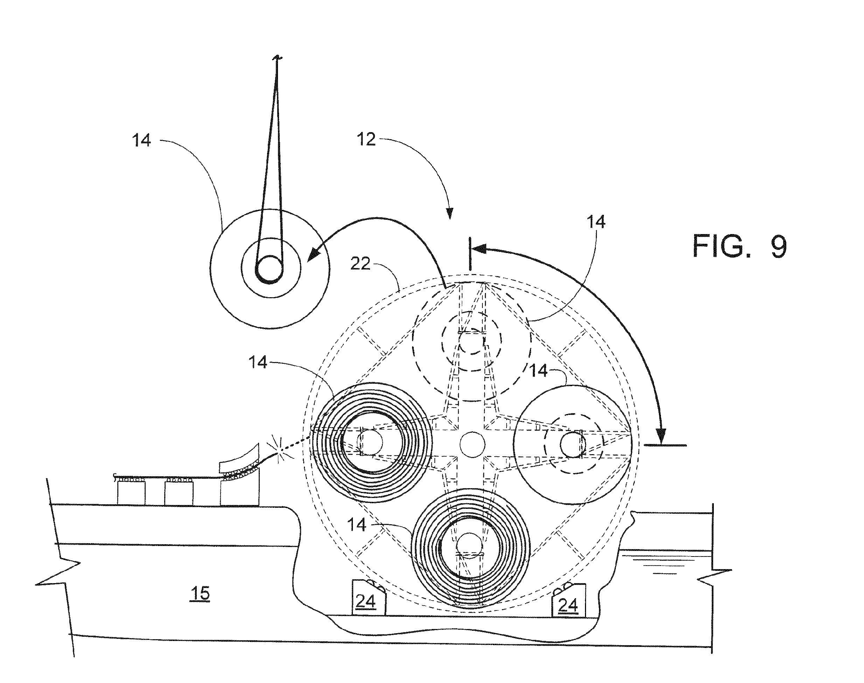

As seen in Fig. 9, an empty product reel 14 may be removed from the cartridge reel 12 for replacement with a full product reel 14. A crane or other lifting arrangement on the vessel 15 is used during product laying operations for removal and installation of the product reels 14 if additional product reels 14 are available on the vessel 15.

One example in accordance with the present teachings may provide a reel arrangement on a vessel for storage and laying of flexible product from the vessel offshore. A cartridge, main reel is designed to receive multiple smaller, flexible product standard storage reels in an epicyclic wheel arrangement for storing and laying the flexible product. The cartridge reel is rotated to bring a selected standard product storage reel from a storage position into a laying position where the product may be taken from the product storage reel and laid on the sea floor. A reel drive head is mounted with the product storage reel for laying product and maintaining proper tension on the product during laying operations.

Further examples in accordance with the present teachings are set out in the following numbered clauses:
Clause 1 A reel arrangement on a vessel for storage and laying of flexible product from the vessel offshore, comprising: a. a cartridge reel received on the vessel for selectively controlled rotation thereon; b. a plurality of product reels rotatably received on and spaced around the cartridge reel, said product reels being smaller in diameter than the cartridge reel and designed to receive the flexible product; c. means for selectively rotating the cartridge reel into a selected position and holding the cartridge reel in the selected position; and d. means for selective, individual rotation of each of the product reels.
Clause 2 The reel arrangement of clause 1, wherein the means for rotating and
holding the cartridge reel in position comprises a drive motor mounted on the vessel that engages with the cartridge reel.
Clause 3 The reel arrangement of clause 1 or 2, wherein the means for individual rotation of each of the product reels comprises a reel drive head engaged with each product reel.
Clause 4 The reel arrangement of clause 1, 2 or 3, wherein the cartridge reel is positioned on the vessel in a vertical orientation such that the central axis of rotation of the cartridge reel is in a horizontal plane.
Clause 5 A reel arrangement for storage and laying of flexible product from a vessel offshore, comprising: a. a cartridge reel received on the vessel for selectively controlled rotation thereon; b. a plurality of product reels rotatably received on and
spaced around the cartridge reel, said product reels being smaller in diameter than the cartridge reel and designed to receive the flexible product; c. a drive motor mounted on the vessel that engages with the cartridge reel for selectively rotating the cartridge reel into a selected position and holding the cartridge reel in the selected position; and d. a reel drive head engaged with each product reel for selective rotation thereof.
Clause 6 The reel arrangement of clause 5, where the cartridge reel is positioned on the vessel in a vertical orientation such that the central axis of rotation of the cartridge reel is in a horizontal plane.

It should be understood that, while the drawings illustrate equipment for vertical lay of the product, equipment for horizontal lay of the product may also be used.

The presently taught approach can provide several advantages over the previously used pipe and cable laying reels.

Some implementations of the present teachings can allow the storage of more reels in a smaller area/footprint.

Some implementations of the present teachings also allow multiple storage reels to be lifted for installation onto, or removal from, the laying vessel in a single lift of the main reel instead of multiple smaller lifts from a supply vessel.

While specific embodiments and/or details of various embodiments and examples have been shown and described above to illustrate the application of the principles of the invention, it is understood that the invention is not limited thereto and indeed may be embodied as more fully set out in the claims, or as otherwise known by those skilled in the art (including any and all equivalents), without departing from such principles.

## Claims

1. A reel arrangement for storage and laying of flexible product from a vessel offshore, comprising:
a cartridge reel received on the vessel for selectively controlled rotation thereon;
a plurality of product reels rotatably received on and spaced around the cartridge reel, said product reels being smaller in diameter than the cartridge reel and designed to receive the flexible product;
means for selectively rotating the cartridge reel into a selected position and holding the cartridge reel in the selected position; and
means for selective, individual rotation of each of the product reels.

2. The reel arrangement of claim 1, wherein the means for rotating and holding the cartridge reel in position comprises a drive motor configured to be mounted on the vessel and configured to engage with the cartridge reel.

3. The reel arrangement of claim 1 or 2, wherein the means for selective individual rotation of each of the product reels comprises a reel drive head configured to engage with each product reel.

4. The reel arrangement of claim 1, 2 or 3, wherein the cartridge reel is positioned on the vessel in a vertical orientation such that the central axis of rotation of the cartridge reel is in a horizontal plane.

5. The reel arrangement of any preceding claim, on a vessel.
